# EUROPÄISCHE PATENTSCHRIFT

(11) **EP 0 759 203 B1**
(45) Veröffentlichungstag und Bekanntmachung des Hinweises auf die Patenterteilung: **28.01.1998**
(21) Anmeldenummer: 95919405.1
(22) Anmeldetag: 05.05.1995
(51) Int. Cl.: G11B 25/06

(54) **KASSETTENRECORDER ZUR WAHLWEISEN AUFNAHME VON KASSETTEN VERSCHIEDENER GRÖSSE**
CASSETTE RECORDER THAT CAN TAKE CASSETTES OF VARIOUS SIZES
ENREGISTREUR A CASSETTE PERMETTANT L'UTILISATION DE CASSETTES DE DIFFERENTES TAILLES

(30) Priorität: 05.05.1994 DE 4415729
(43) Veröffentlichungstag der Anmeldung: 26.02.1997
(73) Patentinhaber: DEUTSCHE THOMSON-BRANDT GMBH, 78048 Villingen-Schwenningen (DE)
(72) Erfinder: WEISSER, Fritz, D-78112 St. Georgen (DE); LAUBLE, Erhard, D-78112 St. Georgen (DE)
(74) Vertreter: Ahrens, Thomas, Dipl.-Phys.
(86) Internationale Anmeldenummer: EP9501709
(87) Internationale Veröffentlichungsnummer: WO9530987

(56) Entgegenhaltungen:
- EP-A- 0 133 822
- EP-A- 0 193 243
- EP-A- 0 312 397
- EP-A- 0 463 786
- DE-A- 3 327 403
- DE-C- 3 432 831

## Beschreibung

Die Erfindung betrifft einen Kassettenrecorder zur wahlweisen Aufnahme von Kassetten verschiedener Größe, bei dem der Abstand der die Bandspulen aufnehmenden Wickelteller veränderbar ist. Ein derartiger Recorder ist bekannt, vgl. SMPTE Journal, August 1989, Seiten 568 bis 574.

Zur wahlweisen Aufnahme von Kassetten unterschiedlicher Größe bzw. verschiedener, einen bandförmigen Aufzeichnungsträger enthaltenden Kassettentypen ist beim bekannten Kassettenrecorder eine Abstandsverstellung der Wickelteller vorgesehen. Der wahlweise Antrieb des Aufwickeltellers, z.B. bei Aufnahme- oder Wiedergabe von Signalen, oder des Abwickeltellers, z.B. bei Rückspulbetrieb des Gerätes, erfolgt jeweils durch einen den jeweiligen Wickelteller direkt antreibenden Wickeltellermotor.

Der Erfindung liegt die Aufgabe zugrunde, einen preisgünstigen, verstellbaren Wickelantrieb zu schaffen.

Aus der DE 33 27 403 A1 ist ein Kassettenlaufwerk für Diktierkassetten bekannt, mit dem Kassetten abgespielt werden können, die unterschiedliche Größen aufweisen und für die verschiedene Bandantriebssysteme erforderlich sind. Mit dem Einlegen der unterschiedlichen Kassetten in eine gemeinsame Kassettenaufnahmeeinrichtung wird laufwerkseitig die Funktionsanpassung der Antriebs- und Bandabtastsysteme automatisch durchgeführt, indem durch eine Kassettenabtasteinrichtung gesteuerte Stellscheiben der jeweiligen Kassettengröße zugeordnete Wickelteller-bzw. Wickeldornpaare ausgewählt und in Position gebracht werden. Der jeweilige Wickelantrieb erfolgt dabei drehrichtungsabhängig mit einem Schwenkgetriebe, wobei es aus der EP 0 193 243 A2 bekannt ist, ein derartiges Schwenkgetriebe mit einer Zentralkupplung zu versehen.

Diese Aufgabe wird durch die im Anspruch 1 und 15 angegebene Erfindung gelöst. Vorteilhafte Weiterbildungen der Erfindung sind in den Unteransprüchen angegeben.

Der Erfindung liegt die Idee zugrunde, zwecks Anpassung des Wickeltellerabstandes an die jeweiligen Bandwickel des jeweiligen Kassettentyps die beiden Wickelteller um je eine zum Laufwerkchassis des Kassettenrecorders ortsfeste Achse schwenkbar anzuordnen und in Abhängigkeit von der beabsichtigten Bandwickelrichtung den jeweiligen mit einem Bandwickel in Eingriff stehenden Wickelteller über eine Rutschkupplung anzutreiben.

Eine derartige Rutschkupplung läßt sich auf einfache Weise z.B. mit auf der jeweiligen Wickelteller-Schwenkachse drehbar angeordneten Kupplungsrädern realisieren. Die jeweiligen Kupplungsräder können dabei einen Teil des Getriebes zwischen dem jeweiligen ziehenden Wickelteller und einem Antriebsmotor bilden oder aber auch mit ihrem Kupplungsbelag als Wickeltellerbremse wirken bzw. ausgenutzt werden.

Mit derartig stationären, an sich bekannten Rutschkupplungen ist zudem der Vorteil verbunden, daß bei Verwendung eines ebenfalls an sich bekannten Schwenkgetriebes mit einem stationären Zentralrad und einem um die Zentralradachse schwenkbaren Schwenkrad, das in Abhängigkeit von der beabsichtigten Bandwickelrichtung selbsttätig mit der einen oder der anderen Rutschkupplung in Eingriff gelangt bzw. an eines der Kupplungsräder der jeweiligen Rutschkupplung anschwenkbar ist, nur ein Motor für den Antrieb beider Wickelteller erforderlich ist.

Es ist auch denkbar, anstelle der beiden Rutschkupplungen eine Zentralkupplung vorzusehen. Ein derartige Kupplung läßt sich in vorteilhafter Weise mit dem Schwenkgetriebe realisieren.

Ein erfindungsgemäßer Kassettenrecorder wird im folgenden anhand der Zeichnungen erläutert. In diesen zeigt
- Fig.1: die Antriebsseite eines kleinen Kassettentyps, durch die die auf einem Laufwerkchassis drehbar angeordneten Wickeltellerdorne mit den Bandwickeln der Kassette in Eingriff gelangen,
- Fig.2: eine Schnittdarstellung der Kassette gemäß Fig.1,
- Fig.3: die Antriebsseite des Standardkassettentyps,
- Fig.4: eine Schnittdarstellung der Standardkassette gemäß Fig.3,
- Fig.5: in einer Draufsicht auf das Laufwerk einen verstellbaren Wickeltellerantrieb,
- Fig.6: in einer Draufsicht die Bandwickelteller in der für den Standardkassettentyp vorgesehenen Betriebsstellung,
- Fig.7: in einer Draufsicht die Bandwickelteller in der für den kleinen Kassettentyp vorgesehenen Betriebsstellung,
- Fig.8: in einer Schnittdarstellung im abwickeltellerseitigen Bereich die Rutschkupplung im Eingriff mit dem Abwickelteller in der für den kleinen Kassettentyp vorgesehenen Betriebsstellung,
- Fig. 9: in einer Schnittdarstellung ein zweites Ausführungsbeispiel mit einem eine Zentralkupplung aufweisenden Schwenkgetriebe, das über ein stationäres Zwischenrad im Eingriff mit dem abwickeltellerseitigen schwenkbaren Bandwickelteller ist,
- Fig. 10: eine weitere Schnittdarstellung das zweiten Ausführungsbeispiel gemäß Fig. 9.

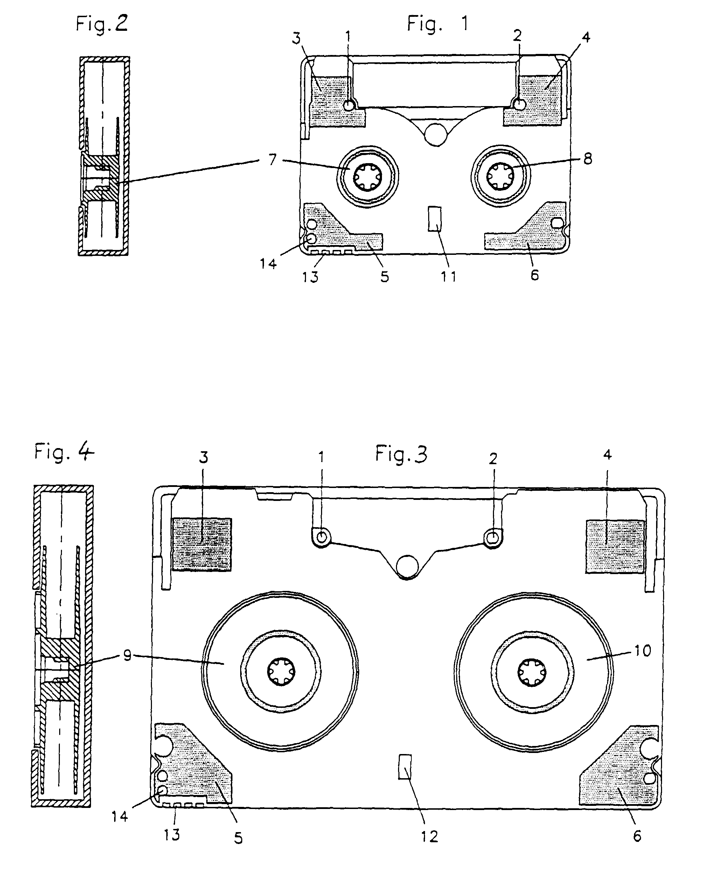

Es sei noch darauf hingewiesen, daß in den Figuren 1 - 10 einander entsprechende Teile mit den gleichen Bezugszeichen versehen sind.

Fig.1 zeigt in einer schematischen Darstellung die Antriebsseite eines beispielhaften kleinen Kassettentyps, der in dem erfindungsgemäßen Kassettenrecorder ohne die Verwendung einer Adapterkassette betrieben werden kann.

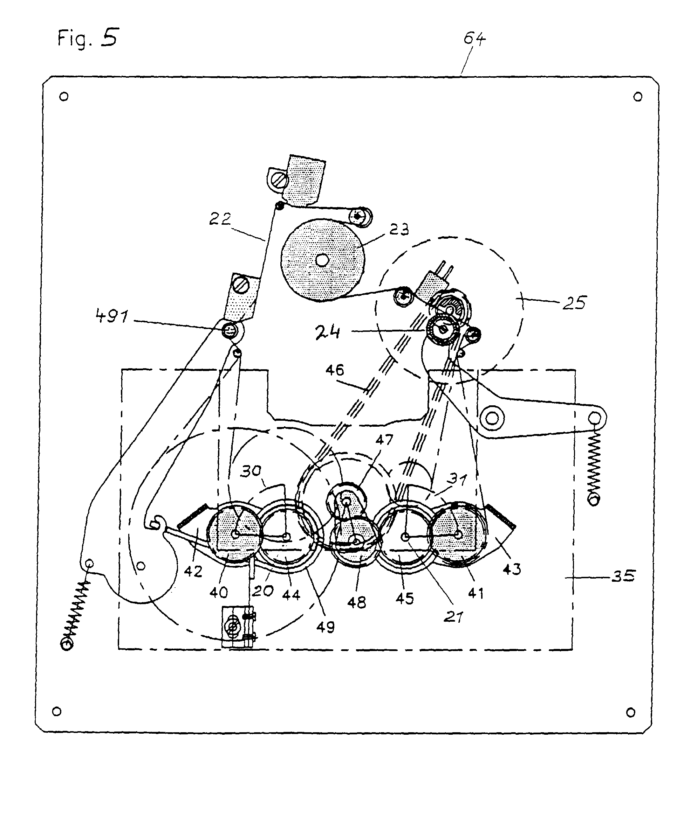

Die Antriebsseite dieses Kassettentyps weist wie der größere in Fig.3 dargestellte beispielhafte Standardkassettentyp bekannterweise Öffnungen 1, 2 für die Kassettenzentrierung mittels nicht dargestellter Stifte sowie Öffnungen für den Eingriff des Antriebsdorns des jeweiligen in Fig.5 - Fig.7 gezeigten Wickeltellers 40, 41 mit dem ihm zugeordneten Bandwickelkörper 7, 8; 9, 10, wobei für die Entriegelung der beiden Bandwickelkörper 7, 8; 9, 10 eine weitere Öffnung 11; 12 vorgesehen ist. Zum Schutz gegen unbeabsichtigtes Überspielen einer bestehenden Aufzeichnung weist die Antriebsseite eine Codieröffnung 14 auf. Darüberhinaus können auf der Rückseite des jeweiligen Kassettentyps Anschlüsse für eine Kassettenerkennung vorgesehen sein.

Fig.2 und Fig.4 zeigen in einer Schnittdarstellung den Bandwickelkörper 7; 9 des aufwickelseitigen Bandwickels des jeweiligen Kassettentyps.

Mit diesen beiden beispielhaften Kassettentypen gemäß Fig.1 bzw. Fig.3 soll zugleich dargstellt sein, daß die Erfindung sich keineswegs nur auf die unterschiedlichen Kassettentypen einer einzigen Recorder-Systemnorm, wie z.B. H8 oder VHS, bezieht.

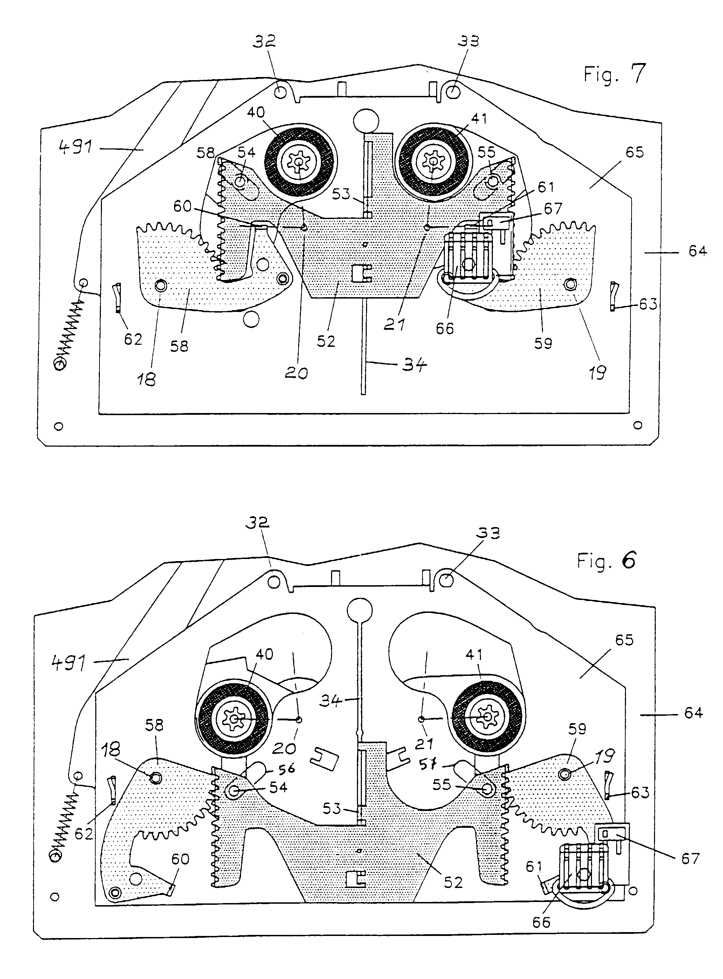

Zum Betrieb bzw. zum Laden von Kassetten unterschiedlichen Typs ist vorzugsweise ferner eine schubladenartige motorgetriebene Ladevorrichtung vorgesehen, die nicht dargestellt ist. Derartige Ladevorrichtungen sind insbesondere von CD-Playern bekannt. In diese wird eine Kassette eingelegt, wobei die bereits erwähnten Zentrierstifte mit den beiden Zentrieröffnungen 1, 2, deren Abstand bei beiden Kassettentypen vorzugsweise gleich ist, in Eingriff gelangen und dabei für eine Kassettenfixierung während des Ladevorganges sorgen. Während des Ladevorganges wird die Kassettenladevorrichtung samt der eingelegten Kassette in einer im wesentlichen zum Laufwerkchassis 64 (Fig.5) parallel verlaufenden Einzugsbewegung in den Recorder transportiert und anschließend über den Wickeltellern 40, 41 abgesenkt. Je nach verwendetem Kassettentyp nehmen dabei in der Kassettenladestellung die beiden Wickelteller 40, 41 die in Fig. 5 bzw. Fig.6 oder die in Fig.7 gezeigte Stellung ein, wobei in Fig.7 die Wickeltellerstellung für den kleinen Kassettentyp dargestellt ist.

Fig. 5 zeigt in schematischer Darstellung in Draufsicht das Laufwerkchassis 64 eines Kassettenrecorders mit verstellbarem Wickeltellerantrieb zum Betrieb unterschiedlicher Kassettentypen.

Der Kassettenrecorder kann z.B. ein Videorecorder mit einer rotierenden Kopftrommel 23 sein, die von dem in einer Kassette 35 auf Spulenkörper 9, 10 gelagerten bandförmigen Aufzeichnungsträger 22 während des Aufzeichnungs- bzw. Wiedergabebetriebes umschlungen wird. Die dargestellte Art, wie der Aufzeichnungsträger 22 aus der Kassette 35 ausgefädelt und mit der Kopftrommel 23 in Eingriff ist, ist als C-Loading bekannt. Der Antrieb des Aufzeichnungsträgers 22 erfolgt mittels einer Andruckrolle 24 und dem vom Capstan-Motor 25 angetriebenen Capstan.

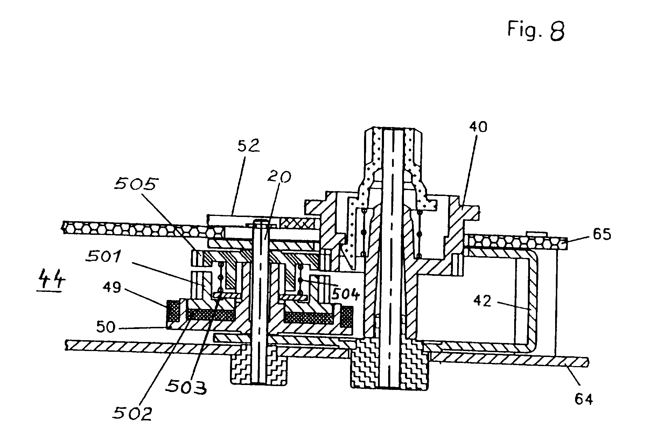

Der Capstan-Motor 25 wird vorzugsweise zugleich auch zum Antrieb beider Wickelteller 40, 41 ausgenutzt. Der Antrieb erfolgt über ein von Riemen 46 getriebenes ortsfestes Zentralrad 47, das mit einem sogenannten schwenkbaren Idlerrad 48 im Eingriff ist und mit dem Idlerrad 48 ein Schwenkgetriebe bildet. In Abhängigkeit von der Drehrichtung des Motors 25 wird über je eine Rutschkupplung 44, 45 entweder der Aufwickelteller 41 oder der Abwickelteller 40 angetrieben. Dargestellt ist der Eingriff des schwenkbaren Idlerrades 48 mit der Rutschkupplung 45, was der Gerätebetriebsart Aufzeichnung, Wiedergabe oder Suchlaufbetrieb vorwärts entspricht. Der Aufbau der jeweiligen orstfesten Rutschkupplung 44, 45 ist in Fig.8 näher beschrieben. Der jeweilige Schwenkbereich der beiden Wickelteller 40, 41 für den Betrieb des Standardkassetten- oder des kleinen Kassettentyps ist durch Kreissektoren 30, 31 dargestellt.

Dadurch, daß die jeweilige Rutschkupplung 44, 45 orstfest ist, kann vorteilhaft eine, insbesondere von Heimvideorecordern her bekannte, auf den Abwickelteller 40 wirkende Bandzugfühlbremse mit einem Bremsband 49 verwendet werden. Während des Aufzeichnungs- bzw. Wiedergabetriebes wirkt das Bremsband 49 auf die abwickelseitige Rutschkupplung 44 ein, wobei dieses in bekannter Weise von einem mit dem Aufzeichnungsträger 22 in Eingriff stehenden Bandzugfühler 491 gesteuert wird.

Für den Antrieb der schwenkbaren Wickelteller 40, 41 können anstelle des Capstan-Motors 25 auch andere Motoren verwendet werden, z.B. separate Motoren, die die Wickelteller 40, 41 direkt antreiben, oder aber auch ein separater Motor, der mittels Zentralrad 47, Idlerrad 48 und Rutschkupplungen 44, 45 die Wickelteller 40, 41 antreibt. Derartige Lösungen lassen sich z.B. vorteilhaft bei Laufwerken realisieren, bei denen vorgesehen ist, die Schaltungen für die Servo- und Ablaufsteuerungen des Laufwerks auf einer Leiterplatte anzuordnen, die dann am Laufwerk, z.B.unterhalb von Chassis 64, angeordnet wird. Der Stator dieser Motoren kann bei einem derartigen Laufwerk kostensparend auch auf der Leiterplatte angeordnet werden.

Fig.6 zeigt in schematischer Darstellung in Draufsicht die beiden Bandwickelteller 40 und 41, bzw. Abwickelteller 40 und Aufwickelteller 41, in der für den Standardkassettentyp vorgesehenen Betriebsstellung, während Fig.7 die für den kleinen Kassettentyp vorgesehene Betriebsstellung zeigt. Als Auflage sind für die Standardkassette ortsfeste Auflagepunkte 62, 63 vorgesehen. Die Auflagepunkte für den kleinen Kassettentyp sind jeweils am Ende zweier Schwenkhebel 58, 59 ausgebildet, die seitlich zu den Wickeltellern 40,41 auf je einer ortsfesten Drehachse 18, 19 schwenkbar angeordnet sind und durch Verzahnungen mit einem Schieber 52 in Eingriff stehen. Entsprechende Bereiche für derartige Auflagepunkte sind auf der Antriebsseite des jeweiligen Kassettentyps gemäß Fig.1 bzw. Fig.3 durch Flächen 3, 4, 5, 6 dargestellt.

Mittels des Schiebers 52, der in einer Führung 34, die in einer zum Chassis 64 parallel angeordneten Deckplatte 65 vorgesehen ist, geführt wird, ist sowohl die Lage der beiden Wickelteller 40, 41 als auch die Lage der beiden Schwenkhebel 58, 59 zwecks Anpassung an die unterschiedlichen Kassettentypen entsprechend einstellbar. Die Einstellung der beiden Schwenkhebel 58, 59 wird durch die vorgenannten Verzahnungen bewirkt. Mit der Einstellung des aufwickeltellerseitigen Schwenkhebels 59 werden zugleich Kassettenerkennungskontakte 66 so verstellt, bzw. um die ortsfeste Drehachse 19 geschwenkt, daß diese Kontakte mit der jeweiligen Kassettenerkennung 13 auf der Rückseite der Kassetten gemäß Fig.1 bzw. Fig.3 in Eingriff gelangen können.

Zur Verstellung der Bandwickelteller 40, 41 in die in Fig.7 gezeigte Betriebsstellung und zurück in die in Fig.6 gezeigte Betriebsstellung ist der Schieber 52 mit der bereits erwähnten nicht dargestellten Kassettenladevorrichtung mechanisch verbindbar, so daß der Schieber 52 automatisch betätigt werden kann, wenn eine Kassette des kleinen Kassettentyps in die Kassettenladevorrichtung eingelegt und mit dem Ladevorgang begonnen wird. Eine derartige mechanische Verbindung läßt sich mit einfachen, manuell oder auch automatisch zu betätigenden mechanischen Mitteln in der Kassettenladevorrichtung realisieren. Sobald die Kassette ihre jeweilige Ladestellung erreicht, d.h. mit den Wickeltellern 40, 41 in Eingriff gelangt, kommen auch die bereits erwähnten nicht dargestellten Zentrierstifte, mit denen die Kassette bereits während des Ladevorganges fixiert ist, mit entsprechenden Positionierungsöffnungen 32 und 33, die auf der Deckplatte 65 angeordnet sind, in Eingriff und positionieren damit die Kassette auf dem Laufwerkchassis 64.

Das Schwenken der Wickelteller 40, 41 erfolgt durch die Schieberplatte 52, welche auch die bereits erwähnte Wickelspulenentriegelung 53 enthält, mit Hilfe von die Wickelteller 40, 41 tragenden Schwenkhebeln 42, 43 (Fig.8), indem an der Schieberplatte 52 angeordnete Bolzen 54, 55 in Langlöcher 56, 57 eingreifen, die in diesen Schwenkhebeln 42, 43 ausgebildet sind.

Fig.8 zeigt in Schnittdarstellung im abwickeltellerseitigen Bereich die Rutschkupplung 44 im Eingriff mit Abwickelteller 40 in der für den kleinen Kassettentyp vorgesehenen Betriebsstellung gemäß Fig.7.

Die Rutschkupplung 44 besteht im wesentlichen aus einem ersten, von dem erwähnten Bremsband 49 umschlungenen Kupplungsrad 50, aus einem zweiten Kupplungsrad 501, aus einer vorzugsweise filzartigen ringförmigen ersten Kupplungsscheibe 502 zwischen erstem 50 und zweitem 501 Kupplungsrad, das bei Antrieb des Abwickeltellers 40 mittels Verzahnungen mit dem schwenkbaren Idlerrad 48 in Eingriff ist, und aus einem dritten Kupplungsrad 505, das mittels Verzahnungen mit schwenkbaren Abwickelteller 40 stets im Eingriff ist, sowie aus vorgespannten Spiralfeder 504 und einer zweiten ringförmigen Kupplungsscheibe 503 zwischen zweitem 501 und drittem Kupplungsrad 505.

Es sei darauf hingewiesen, daß die Darstellung gemäß Fig.8 bis auf das Bremsband 49 entsprechend auch für den aufwickeltellerseitigen Bereich gilt.

Der Aufwickelteller 40 ist auf einem drehbaren, U-förmig gebogenen Schwenkhebel 42 gelagert, dessen Drehpunkt durch die ortsfeste Achse 20 der Rutschkupplung 44 gebildet wird. Auf der Achse 20 sind die Kupplungselemente 50, 501, 502, 503, 504 und 505 drehbar gelagert. Durch eine nicht dargestellte Höhenverstellung des Idlerrades 48 kann dieses mit dem dritten Kupplungsrad 505 in Eingriff gebracht werden und das Antriebsmoment direkt auf den Wickelteller 40 übertragen.

Auf das Kupplungsrad 50 können neben dem Bremsband 49 zur Bandzugregelung auch noch nicht dargestellte Haupt- und Hilfsbremsen wirken.

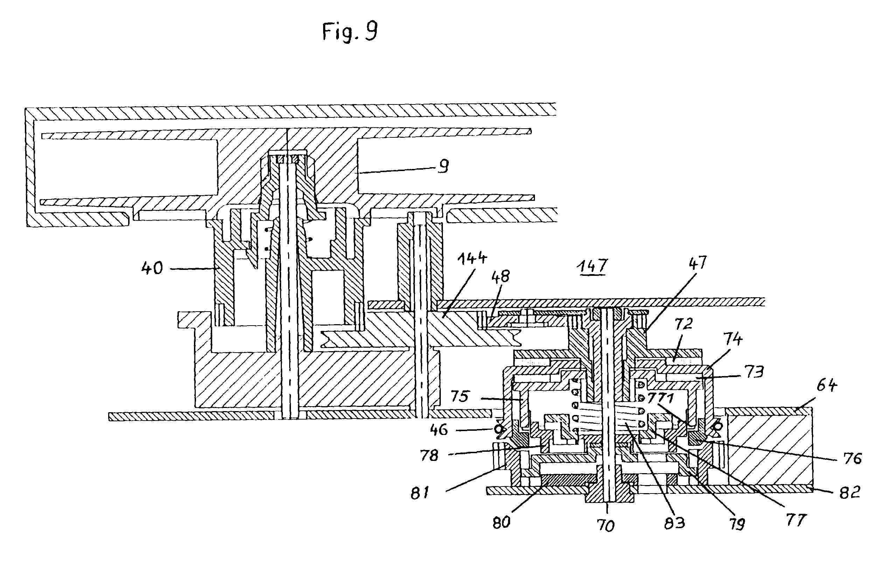

Fig. 9 zeigt in Schnittdarstellung schematisch ein zweites Ausführungsbeispiel mit einem eine Zentralkupplung aufweisenden Schwenkgetriebe 147, das über ein stationäres Zwischenrad 144 mit dem um die Zwischenradachse schwenkbaren abwickeltellerseitigen Bandwickelteller 40 im Eingriff ist.

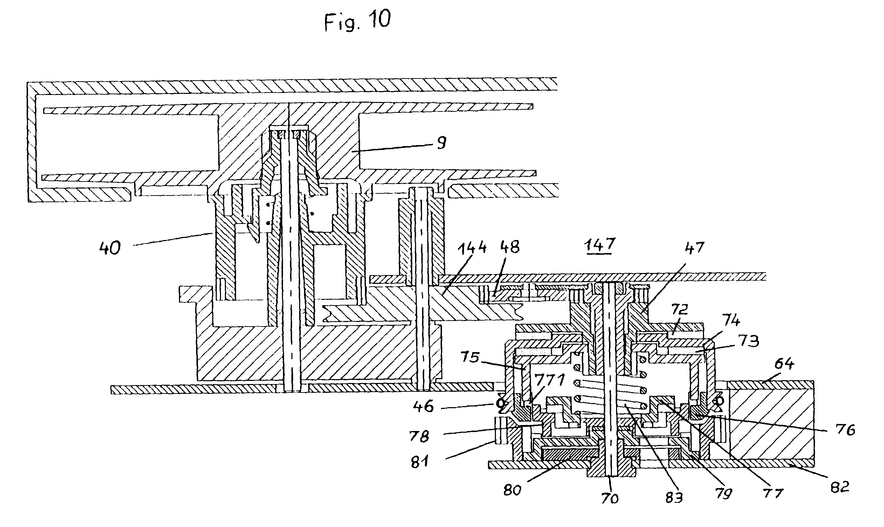

Das zweite Ausführungsbeispiel unterscheidet sich von dem ersten Ausführungsbeispiel gemäß Fig. 5 und Fig. 8 im wesentlichen lediglich dadurch, daß anstelle der Rutschkupplungen 44, 45 eine Zentralkupplung im Schwenkgetriebe 147 sowie Zwischenräder vorgesehen sind, wobei in Fig. 9 und Fig. 10 die Betriebsstellung für den großen bzw. den Standardkassettentyp mit dem abwickeltellerseitigen Zwischenrad 144 dargestellt ist.

Das Schwenkgetriebe 147 besteht im wesentlichen aus einem um die stationäre Schwenkgetriebeachse 70 schwenkbaren Idlerrad 48, einem konzentrisch angeordneten Zentralrad 47, einem konzentrisch angeordneten becherförmigen Antriebsrad 74 und einer Zentralkupplung, die im wesentlichen mit einem konzentrisch angeordneten Kupplungsring 75, einem ersten zwischen dem Kupplungsring 75 und dem becherförmigen Antriebsrad 74 angeordneten Filzring 73, einem zweiten zwischen dem becherförmigen Antriebsrad 74 und dem Zentralrad 47 angeordneten Filzring 72, einer konzentrisch angeordneten spiralförmigen Druckfeder 83, einem konzentrisch angeordneten Justagering 77, einer konzentrisch angeordneten Tragscheibe 78, einer konzentrisch angeordneten Mitnahmescheibe 79, einer konzentrisch angeordneten Hubkurve 80 und einem konzentrisch angeordneten Verstellring 81 gebildet wird. Zur Lagerung des Schwenkgetriebes 147 ist eine Tragplatte 82 am Laufwerkchassis 64 vorgesehen, die unterhalb des Laufwerkchassis 64 angeordnet ist und parallel zu diesem verläuft.

Die Filzringe 72 und 73 bilden mit dem Zentralrad 47, dem Antriebsrad 74 und dem Kupplungsring 75 eine Rutschkupplung, deren Wirkung über den in Achsrichtung des Schwenkgetriebes verstellbaren Justagering 77, die in Achsrichtung verstellbare Mitnahmescheibe 79 und über die in Achsrichtung verstellbare Druckfeder 83 einstellbar ist. Die Druckfeder 83 ist vorgespannt. Durch die Einstellung der Wirkung der Rutschkupplung kann das Antriebsmoment eingestellt und damit angepaßt werden, z.B. entsprechend dem Wickeldurchmesser des Bandwickels am aufwickelnden bzw. ziehenden Bandteller, um den Bandzug während des Spielbetriebes in einem zulässigen Bereich zu halten.

Die Einstellung der jeweiligen Wirkung der Rutschkupplung und damit des jeweiligen Antriebsmomentes erfolgt durch Verdrehen des Verstellringes 81 und der Mitnahmescheibe 79. Die Verdrehung, für die vorzugsweise ein Drehbereich von etwa 120° vorgesehen ist, erfolgt durch den nichtdargestellten Fädelmotor über ein ebenfalls nichtdargestelltes Zahnradgetriebe, das mit der entsprechenden Verzahnung am äußeren Umfang des Verstellringes 81 im Eingriff ist. Bei Verdrehung des Verstellringes 81 wird die Mitnahmescheibe 79 mittels der am ihrem Umfang rampenartig ausgebildeten Hubkurve 80 samt Tragscheibe 78 und Justagering 77 in Achsrichtung des Schwenkgetriebes 147 bewegt, wodurch die Druckfeder 83 je nach Bewegungsrichtung mehr oder weniger gespannt wird, so daß ein von der Spannung der Druckfeder abhängiges Drehmoment auf das Zentralrad 47 übertragen wird. Dabei ist in Fig. 9 die Gerätebetriebsart "Suchlauf-Rückwärts" dargestellt. Mit dem Justagering 77 kann eine Justierung der Rutschkupplung durchgeführt werden. Die Justierung erfolgt durch eine Verstellung bzw. Verdrehung des Justageringes 77, die dabei aufgrund einer rampenartigen Ausbildung an der Tragscheibe 78 eine Bewegung des Justageringes 77 in Richtung der Schenkgetriebeachse 70 bewirkt. Der Antrieb erfolgt wie bei dem ersten Ausführungsbeispiel gemäß Fig. 5 ebenfalls durch den Capstan-Motor 25 über einen Riemen 46, der mit dem becherförmigen Antriebsrad 74 in Eingriff ist.

Für den Umspulbetrieb, bei dem ein größeres Antriebsmoment erforderlich ist, ist eine Überbrückung der Rutschkupplung vorgesehen. Gemäß Fig. 10, die eine weitere Schnittdarstellung des zweiten Ausführungsbeispiels zeigt, ist durch Verstellung des Verstellringes 81 der Justagering 77 soweit abgesenkt, daß an ihm ausgebildete Rastnasen 771, die in Ausschnitte des Kupplungsrings 75 greifen, zusätzlich in Aussparungen eines Blockierringes 76 greifen, der mit dem Antriebsrad 74 drehfest verbunden ist. Dadurch, daß der Kupplungsring 75 in zur Schwenkgetriebeachse 70 parallelen, am Schaft des Zentralrades 47 ausgebildeten Nuten geführt wird und das Antriebsrad 74 mit dem Kupplungsring 75 durch die Rastnasen 771 miteinander verbunden sind, erfolgt der Antrieb vom Antriebsrad 74 über die Rastnasen 771 und den Kupplungsring 75 direkt auf das Zentralrad 47.

Wie in Fig. 9 und Fig. 10 dargestellt, weist das abwickelseitige Zwischenrad 44 eine umlaufende Nut auf, diese Nut ist für ein in den Figuren 5 und 8 dargestelltes Bremsband 49 vorgesehen, das zu der ansich bekannten Bandzugregelung dient.

## Patentansprüche

1. Kassettenrecorder zur wahlweisen Aufnahme von Kassetten verschiedener Größe, bei dem der Abstand der die Bandspulen aufnehmenden Wickelteller (40, 41) veränderbar ist, **dadurch gekennzeichnet**, daß die Wickelteller (40, 41) den jeweiligen Kassetten verschiedener Größe gemeinsam sind und daß jeweils ein Wickelteller (40, 41) mit seinem Umfang an dem Umfang einer als Antrieb dienenden Rutschkupplung (44, 45) anliegt und um die Drehachse der Rutschkupplung unter Einhaltung seiner Anlage an der Rutschkupplung schwenkbar ist.

2. Recorder nach Anspruch 1, **dadurch gekennzeichnet,** daß die Rutschkupplung (44, 45) durch ortsfeste drehbar am Chassis (64) gelagerte Kupplungsräder (501, 505) mit einem Reibbelag (503) gebildet ist.

3. Recorder nach Anspruch 1 oder 2, **dadurch gekennzeichnet,** daß zwischen zwei den beiden Wickeltellern (40, 41) zugeordneten Rutschkupplungen (44, 45) ein als Antrieb für die Wickelteller (40) dienendes Zentralrad (47) gelagert ist, das wahlweise mit der ersten oder zweiten Rutschkupplung kuppelbar ist.

4. Recorder nach Anspruch 3, **dadurch gekennzeichnet,** daß zwischen dem Zentralrad (47) und den beiden Rutschkupplungen (44,45) ein Idlerrad (48) derart schwenkbar gelagert ist, daß es das Zentralrad (47) wahlweise mit der ersten oder zweiten Rutschkupplung (44, 45) kuppelt.

5. Recorder nach Anspruch 1, **dadurch gekennzeichnet,** daß auf dem Chassis eine Schieberplatte (52) verschiebbar gelagert ist, die an gegenüberliegenden Enden jeweils mit einem Vorsprung (54, 55) in ein Langloch eines schwenkbar am Chassis (64) gelagerten und den Wickelteller (40, 41) tragenden Schwenkhebels (42, 43) eingreift.

6. Recorder nach Anspruch 5, **dadurch gekennzeichnet,** daß die Schieberplatte (52) an gegenüberliegenden Enden jeweils mit einer Zahnstange versehen ist, in die ein teilkreisförmiger Zahnkranz für die Schwenkbewegung von schwenkbar am Chassis (64) gelagerten Schwenkhebel (58, 59) eingreift.

7. Recorder nach Anspruch 6, **dadurch gekennzeichnet,** daß der Schwenkhebel (58, 59) einen nach oben ragenden Vorsprung (60) aufweist, der einen Auflagepunkt für die eingelegte Kassette bildet.

8. Recorder nach Anspruch 5, **dadurch gekennzeichnet,** daß die Schieberplatte (52) einen nach oben weisenden Vorsprung (53) aufweist, der in eine Öffnung des eingelegten Kassettengehäuses eingreift und in dem Kassettengehäuse zur Entriegelung einer dort vorgesehenen Wickelverriegelung gegen Verdrehen der Bandspulen dient.

9. Recorder nach Anspruch 1, **dadurch gekennzeichnet,** daß das Zentralrad (47) über einen Antriebsriemen (46) mit dem Capstanmotor (25) verbunden ist.

10. Recorder nach Anspruch 1, **dadurch gekennzeichnet,** daß dem Zentralrad (47) ein gesonderter Antriebsmotor zugeordnet ist.

11. Recorder nach Anspruch 3, **dadurch gekennzeichnet,** daß dem Kupplungsrad (50) der Rutschkupplung ein Bandzugfühler (491) mit einem Bremsband (49) zugeordnet ist.

12. Recorder nach Anspruch 1, **dadurch gekennzeichnet,** daß die Schwenkbewegung des Wickeltellers (40, 41) um die Rutschkupplung (44, 45) etwa 90 beträgt.

13. Recorder nach Anspruch 1, **dadurch gekennzeichnet,** daß den Rutschkupplungen (44, 45) getrennte Antriebsmotoren zugeordnet sind.

14. Recorder nach Anspruch 1, **dadurch gekennzeichnet,** daß den Rutschkupplungen (44, 45) ein gemeinsamer Antriebsmotor zugeordnet und wahlweise mit einer der Rutschkupplungen in Eingriff bringbar ist.

15. Kassettenrecorder zur wahlweisen Aufnahme von Kassetten verschiedener Größe, bei dem der Abstand der die Bandspulen aufnehmenden Wickelteller (40, 41) veränderbar ist, **dadurch gekennzeichnet**, daß die Wickelteller (40, 41) den jeweiligen Kassetten verschiedener Größe gemeinsam sind und daß zum Antrieb der Wickelteller (40, 41) ein Schwenkgetriebe (147) vorgesehen ist, das eine Zentralkupplung zur Drehmomentübertragung aufweist.

16. Recorder nach Anspruch 15, **dadurch gekennzeichnet,** daß die Zentralkupplung eine einstellbare Rutschkupplung zum Übertragen unterschiedlicher Antriebsmomente aufweist.

17. Recorder nach Anspruch 15 oder 16, **dadurch gekennzeichnet,** daß Mittel zur Überbrückung der Rutschkupplung vorgesehen sind.

## Claims

1. Cassette recorder which can selectively receive cassettes of various sizes, in which the distance between the winding plates (40, 41) receiving the reels of tape is variable, characterized in that the winding plates (40, 41) are the same for the respective cassettes of various sizes, and in that in each case a winding plate (40, 41) lies with its circumference in contact with the circumference of a slip clutch (44, 45), serving as a drive, and can be swivelled about the pivot spindle of the slip clutch, maintaining its contact with the slip clutch.

2. Recorder according to Claim 1, characterized in that the slip clutch (44, 45) is formed by fixed clutch wheels (501, 505), which are mounted rotatably on the chassis (64) and have a friction lining (503).

3. Recorder according to Claim 1 or 2, characterized in that between two slip clutches (44, 45), assigned to the two winding plates (40, 41), there is mounted a central wheel (47), which serves as a drive for the winding plates (40) and can be coupled selectively with the first or second slip clutch.

4. Recorder according to Claim 3, characterized in that between the central wheel (47) and the two slip clutches (44, 45) there is mounted an idler wheel (48) in such a way that it can swivel with the effect that it couples the central wheel (47) selectively with the first or second slip clutch (44, 45).

5. Recorder according to Claim 1, characterized in that on the chassis there is displaceably mounted a slide plate (52), which engages at opposite ends, in each case with a projection (54, 55), into a slot of a swivel lever (42, 43) swivel-mounted on the chassis (64) and carrying the winding plate (40, 41).

6. Recorder according to Claim 5, characterized in that the slide plate (52) is provided at opposite ends in each case with a toothed rack, into which a toothed rim in the form of a pitch circle engages for the swivelling movement of swivel levers (58, 59) swivel-mounted on the chassis (64).

7. Recorder according to Claim 6, characterized in that the swivel lever (58, 59) has an upwardly protruding projection (60), which forms a supporting point for the placed-in cassette.

8. Recorder according to Claim 5, characterized in that the slide plate (52) has an upwardly pointing projection (53), which engages into an opening of the placed-in cassette housing and serves in the cassette housing for releasing a winding interlock provided there to prevent turning of the reels of tape.

9. Recorder according to Claim 1, characterized in that the central wheel (47) is connected to the capstan motor (25) via a drive belt (46).

10. Recorder according to Claim 1, characterized in that the central wheel (47) is assigned a separate drive motor.

11. Recorder according to Claim 3, characterized in that the clutch wheel (50) of the slip clutch is assigned a tape-tension sensor (491) with a braking band (49).

12. Recorder according to Claim 1, characterized in that the swivelling movement of the winding plate (40, 41) about the slip clutch (44, 45) is about 90 [lacuna].

13. Recorder according to Claim 1, characterized in that the slip clutches (44, 45) are assigned separate drive motors.

14. Recorder according to Claim 1, characterized in that the slip clutches (44, 45) are assigned a common drive motor and can be brought into engagement selectively with one of the slip clutches.

15. Cassette recorder which can selectively receive cassettes of various sizes, in which the distance between the winding plates (40, 41) receiving the reels of tape is variable, characterized in that the winding plates (40, 41) are the same for the respective cassettes of various sizes, and in that for driving the winding plates (40, 41) there is provided a swivel gear mechanism (147), which has a central clutch for torque transmission.

16. Recorder according to Claim 15, characterized in that the central clutch has an adjustable slip clutch for transmitting different driving torques.

17. Recorder according to Claim 15 or 16, characterized in that means are provided for bridging the slip clutch.

## Revendications

1. Magnétophone à cassette pour la réception au choix de cassettes de différentes tailles, dans lequel l'écartement entre les plateaux de bobinage (40, 41) recevant les bobines est modifiable, caractérisé en ce que les plateaux de bobinage (40, 41) sont communs aux cassettes de différentes tailles et que le périmètre d'un plateau de bobinage (40, 41) repose respectivement sur le périmètre d'un accouplement patinant tenant lieu d'entraînement (44, 45) et qu'il peut pivoter autour de l'axe de rotation de l'accouplement patinant en respectant son installation.

2. Magnétophone selon la revendication 1, caractérisé en ce que l'accouplement patinant (44, 45) est formé par des roues d'accouplement (501, 505) stationnaires logées en pivot sur le châssis (64) et pourvues d'un revêtement de friction (503).

3. Magnétophone selon la revendication 1 ou 2, caractérisé en ce qu'une roue centrale (47) servant d'entraînement pour les plateaux de bobinage (40) est logée entre deux accouplements patinants (44, 45) affectés aux deux plateaux de bobinage (40, 41), qui peut être accouplée au choix au premier ou au deuxième accouplement patinant.

4. Magnétophone selon la revendication 3, caractérisé en ce qu'une roue Idler (48) est logée en pivot entre la roue centrale (47) et les deux accouplements patinants (44, 45), de telle sorte qu'elle accouple la roue centrale (47), au choix avec le premier ou le deuxième accouplement patinant (44, 45).

5. Magnétophone selon la revendication 1, caractérisé en ce qu'une plaque de coulisseau (52) est logée de façon mobile sur le châssis et s'engrène respectivement aux extrémités opposées avec une saillie (54, 55) dans un trou oblong d'un levier pivotant (42, 43), logé en pivot sur le châssis (64) et portant le plateau de bobinage (40, 41).

6. Magnétophone selon la revendication 5, caractérisé en ce que la plaque de coulisseau (52) est respectivement pourvue aux extrémités opposées d'une crémaillère dans laquelle vient s'engrener une couronne dentée partiellement circulaire pour le mouvement pivotant du levier (58, 59) logé en pivot sur le châssis (64).

7. Magnétophone selon la revendication 6, caractérisé en ce que le levier pivotant (58, 59) présente une saillie vers le haut (60) formant un point d'appui pour la cassette insérée.

8. Magnétophone selon la revendication 5, caractérisé en ce que la plaque de coulisseau (52) présente une saillie vers le haut (53) venant s'engrener dans une ouverture du boîtier de cassette inséré et servant, dans le boîtier de cassette, au déverrouillage d'un verrouillage de plateau qui y est prévu contre la torsion des bobines de bande.

9. Magnétophone selon la revendication 1, caractérisé en ce que la roue centrale (47) est reliée au moteur cabestan (25) via une courroie d'entraînement.

10. Magnétophone selon la revendication 1, caractérisé en ce qu'un moteur d'entraînement distinct est affecté à la roue centrale (47).

11. Magnétophone selon la revendication 3, caractérisé en ce qu'un palpeur de la traction de bande (491) avec une bande de freinage (49) est affecté à la roue d'accouplement (50) de l'accouplement patinant.

12. Magnétophone selon la revendication 1, caractérisé en ce que le mouvement pivotant du plateau de bobinage (40, 41) est d'environ 90 autour de l'accouplement patinant (44, 45).

13. Magnétophone selon la revendication 1, caractérisé en ce que des moteurs d'entraînement séparés sont affectés aux accouplements patinants (44, 45).

14. Magnétophone selon la revendication 1, caractérisé en ce qu'un moteur d'entraînement commun est affecté aux accouplements patinants (44, 45) et qu'il peut être engrené au choix dans l'un ou l'autre des accouplements patinants.

15. Magnétophone à cassette pour la réception au choix de cassettes de différentes tailles, dans lequel l'écartement entre les plateaux de bobinage (40, 41) recevant les bobines est modifiable, caractérisé en ce que les plateaux de bobinage (40, 41) sont communs aux cassettes de différentes tailles et en ce qu'un engrenage pivotant (147) est prévu pour l'entraînement des plateaux de bobinage (40, 41), qui présente un accouplement central pour la transmission du moment de torsion.

16. Magnétophone selon la revendication 15, caractérisé en ce que l'accouplement central présente un accouplement patinant réglable pour la transmission de différents moments d'entraînement.

17. Magnétophone selon la revendication 15 ou 16, caractérisé en ce que des moyens de pontage de l'accouplement patinant ont été prévus.
